# EUROPÄISCHE PATENTSCHRIFT

(11) **EP 1 963 699 B1**
(45) Veröffentlichungstag und Bekanntmachung des Hinweises auf die Patenterteilung: **23.05.2012**
(21) Anmeldenummer: 06819645.0
(22) Anmeldetag: 21.11.2006
(51) Int. Cl.: F16D 23/14

(54) **BETÄTIGUNGSANORDNUNG FÜR EIN KUPPLUNGSAUSRÜCKLAGER**
ACTUATING ARRANGEMENT FOR A CLUTCH RELEASE BEARING
SYSTEME D'ACTIONNEMENT DU PALIER DE DEBRAYAGE D'UN ACCOUPLEMENT

(30) Priorität: 16.12.2005 DE 102005060257
(43) Veröffentlichungstag der Anmeldung: 03.09.2008
(73) Patentinhaber: Schaeffler Technologies AG & Co. KG, 91074 Herzogenaurach (DE)
(72) Erfinder: KLÖPFER, Bernhard, 91438 Bad Windsheim (DE); WINKELMANN, Ludwig, 91056 Erlangen (DE)
(86) Internationale Anmeldenummer: PCT/EP2006/068698
(87) Internationale Veröffentlichungsnummer: WO 2007/068557

(56) Entgegenhaltungen:
- DE-A1- 19 716 218
- DE-C1- 19 622 773
- GB-A- 2 013 820
- GB-A- 2 032 565
- GB-A- 2 098 697

## Beschreibung

### Gebiet der Erfindung

Die Erfindung betrifft eine Kupplungsausrückvorrichtung mit zumindest einem Kupplungsausrücklager und mit einem Betätigungsglied, wobei zumindest ein dem Kupplungsausrücklager zugeordnetes erstes Bauelement und wenigstens ein dem Betätigungsglied zugeordnetes zweites Bauelement zu einer Wirkverbindung zwischen dem Kupplungsausrücklager und dem Betätigungsglied miteinander verbunden sind.

### Hintergrund der Erfindung

Betätigungseinrichtungen von Kupplungsausrückvorrichtungen sind zum Beispiel Schwingen oder Gabeln, die beispielsweise über Seilzug oder andere Übertragungsglieder mit dem Kupplungspedal oder mit einem anderen Aktor verbunden sind. Mit derartigen Betätigungseinrichtungen werden zum Beispiel in DE 101 14 846 A1 beschriebene Kupplungsausrücklager betätigt.

Es gibt auch hydraulische oder pneumatische Betätigungseinrichtungen, die bei nachfolgend beschriebener Erfindung besonders berücksichtigt sind. Eine derartige Kupplungsausrückvorrichtung ist in DE 196 22 773 beschrieben.

Bauelemente sind beispielsweise ringförmige Lagerringe, entweder Innenringe oder der Außenringe, des Kupplungsausrücklagers oder Führungsflansche bzw. Stützringe für Lagerringe oder Betätigungsglieder, an denen selbstzentrierende Kupplungsausrücklager radial ausgleichsbeweglich geführt und axial abgestützt bzw. gehalten sind. Bauelemente sind beispielsweise auch Nehmerkolben der Betätigungsglieder oder andere Einzelteile der Betätigungseinrichtung, die geeignet sind Kräfte auf das Kupplungsausrücklager zu übertragen.

Die Wirkverbindung ist in der Regel durch Wirkungen aus Zug- oder Druckkräfte begründet, die weiter gegeben werden müssen. Diese Ausrückkräfte und deren Reaktionskräfte werden durch die Betätigungseinrichtung axial auf die Bauelemente aufgebracht sowie von den Bauelementen zum Kupplungsausrücklager weitergeben und führen schließlich zum Aus- bzw. Einrücken der Kupplung.

Die in DE 196 22 773 C1 beschriebenen Bauelemente des Standes der Technik sind beispielsweise mittels Befestigungsgliedern, wie Hülsen aus Blech bzw. Ränder von Hülsen aus Blech, unlösbar miteinander verbunden. Die Befestigung ist aufwendig und kostenintensiv.

GB 2 098 697 A *zeigt eine Kupplungsausrückvorrichtung mit einem Kupplungsausrücklager und mit einer Betätigungseinrichtung. Ein dem Kupplungslager zugeordnetes erstes Bauelement in Form einer Führungshülse und Lagerrings und ein der Betätigungseinrichtung in Form eines Nehmerzylinderkolbens zugeordnetes zweites Bauelement mittels eines Steckelements in Form einer Bügelfeder zu einer Wirkverbindung zwischen dem Kupplungsausrücklager und der Betätigungseinrichtung miteinander verbunden sind.*

*Eine dem zuvor beschriebenen Beispiel vergleichbare Steckverbindung an einem Kupplungsausrücklager zeigt* GB 213820 A*, mit der die Führungshülse mit einem äußeren Lagerring wirkverbunden ist. Das Steckelement in Form eines Federrings greift in umfangsseitig angeordnete Stecklöcher der Führungshülse formschlüssig ein.*

*Ein weiteres Kupplungsausrücklager ist in* GB2032565A *beschrieben. Das Kupplungsausrücklager weist eine zwischen zwei Bauelementen Radialtoleranzen ausgleichende Verdrehsicherung auf. Eines der Bauelemente ist ein äußerer Lagerring, auf dem ein mit radialen Erhöhungen in Form von Federelementen gebildete versehener Toleranzring sitzt. Die Federelemente bilden jeweils ein radiales erhöhtes Steckprofil, welches mit einer radial nach außen gerichteten Vertiefung eines Gehäuses des Kupplungsausrücklagers korrespondiert.*

*Schließlich zeigt* DE 197 16 218 A1 *eine Kupplungsausrückvorrichtung mit zumindest einem Kupplungsausrücklager und mit einer hydraulischen Betätigungseinrichtung. Ein der Betätigungseinrichtung zugeordnetes erstes Bauelement in Form eines inneren Lagerrings und ein weiteres der Betätigungseinrichtung zugeordnetes zweites Bauelement in Form eines Nehmerzylinderkolbens sind mittels eines Halteelement miteinander wirkverbunden. Dazu sitzt der Lagerring konzentrisch auf dem Nehmerzylinderkolben. Das Halteelement weist Steckelemente auf, die jeweils in ein axiales Steckloch an dem Nehmerzylinderkolben formschlüssig eingreifen und mit radialen Erhöhungen bildende nachgiebige Steckprofile hintergriffen.*

### Zusammenfassung der Erfindung

Die Aufgabe der Erfindung ist es daher, die zuvor genannten Nachteile zu vermeiden.

Diese Aufgabe ist nach dem Gegenstand des Anspruches 1 und weiterer abhängiger Ansprüche gelöst.

Das erste Bauelement und das zweite Bauelement sind mittels zumindest eines Steckelementes miteinander verbunden. Das Steckelement oder in der Regel mehrere der Steckelemente sind einteilig mit dem ersten Bauelement ausgebildet oder separat zu dem ersten oder zweiten Bauelement ausgebildet. Wenn die Steckelemente einteilig mit dem ersten Bauelement ausgebildet sind, stehen diese in eine radiale Richtung von dem ersten Bauelement ab und greifen jeweils formschlüssig in ein Steckloch oder eine Steckvertiefung an dem zweiten Bauelement formschlüssig ein. Wenn die Steckelemente separat zu den Bauteilen ausgebildet sind, greifen diese in mindesten ein erstes Steckloch an dem ersten Bauelement und zugleich in ein zweites Steckloch an dem zweiten Bauelement zumindest formschlüssig ein.

Die zumeist rotationssymmetrisch ausgebildeten hohlzylindrischen bzw. ringförmig ausgebildeten Bauelemente sind vorzugsweise ineinander gesteckt und somit in radiale Richtung aneinander gehalten - jedoch in axiale Richtung mittels des Steckelementes gehalten und lösbar miteinander verbunden. Jedes der ineinander bzw. aufeinander sitzenden Bauelemente weist jeweils ein oder mehrere Stecklöcher auf. Jedes der Stecklöcher korrespondiert in Lage und Form mit jeweils zumindest einem weiteren Steckloch an dem anderen Bauelement(en) sowie mit mindestens einem dazu passenden Steckelement. Das Steckelement ist in die aneinander liegenden oder räumlich voneinander entfernten Stecklöcher vorzugsweise radial nach innen oder nach außen gerichtet eingesteckt, eingepresst, eingeklemmt oder verrastet. Wenigstens zwei Bauelemente sind durch den gleichzeitigen Eingriff des Steckelements in jeweils wenigstens ein Steckloch an jedem der Bauelemente wirksam axial aneinander gesichert. Die Steckverbindung ist wahlweise für das Übertragen von axial gerichteten Betätigungskräften, wie den Ausrückkräften zum Ausrücken der Kupplung, vorgesehen.

Derartige Steckelemente sind zum Beispiel Passstifte, alle Arten von Klemmen und Klammern sowie Splinte. Eine Ausgestaltung der Erfindung sieht einen Sicherungsring vor, der mehrere radial nach außen oder innen ragende der Steckelemente in Form von Zacken, Schlaufen oder stiftartigen Ansätzen aufweist. Denkbar ist der Einsatz von Steckelementen aus Stahl, Nichteisenmetallen oder aus Kunststoff.

Die Steckelemente sind in die Steckverbindung lose eingesteckt, eingepresst oder sind gegen die Begrenzung zumindest eines der Stecklöcher vorgespannt. Im zuletzt genannten Fall sind derartige Steckelemente beispielsweise Schlaufen oder Bügel aus Draht, die einzeln oder an einem gemeinsamen Ring aus Draht ausgebildet sind. Jede der Schlaufen oder jeder der Bügel greift durch zumindest ein Steckloch an einem der Bauelemente hindurch und in mindestens ein weiteres Steckloch an dem anderen Bauelement ein. Die Schlaufen oder Bügel sind alternativ auch gleichzeitig gegen die Innenwandung zumindest eines der Stecklöcher vorgespannt. Ein Teil der Schlaufe oder des Bügels steht gleichzeitig oder davon unabhängig zumindest an einer Seite aus dem jeweiligen Loch heraus sowie seitlich über den Rand des Loches und sperrt gegen unbeabsichtigtes Lösen des Steckelements.

Eine weitere Ausgestaltung sieht vor, dass die konzentrisch zueinander angeordnet aufeinander sitzenden Bauelemente aus Blech eingeformte Steckprofile aufweisen. Wenigstens eines der Bauelemente weist ein Steckprofil mit einer radialen Vertiefung und zumindest das andere der Bauelemente mindestens ein mit der Vertiefung korrespondierendes Steckprofil aus einer radialen Erhöhung auf. Die Erhöhung greift formschlüssig in die Vertiefung ein, so dass die Bauelemente auch aneinander gegen Verdrehen um die Rotationsachse relativ zueinander gesichert sind.. Durch die ineinander sitzenden Profile erstreckt sich wenigstens ein gemeinsamer Schlitz. Ein Sicherungsring wird dann als Steckelement in entsprechend in die Vertiefung und Erhöhung eingebrachten Schlitze eingeschnappt und sichert die Bauelemente in axialer Richtung aneinander. Der Einsatz von handelsüblichen Sicherungsringen ist möglich.

Mit der Erfindung ist eine einfache und Bauraum sparende lösbare Fixierung von Kupplungsausrücklagern am Betätigungsglied vorgesehen, die kostengünstig herzustellen ist. An unterschiedliche Anforderungen angepasste zueinander verschiedene Kupplungsausrückvorrichtungen sind nach dem Baukastenprinzip durch Austausch und Kombination von nur wenigen Gleichteilen herstellbar. Die Anzahl der herzustellenden Bauelemente ist auf ein Minimum reduziert und so der logistische Aufwand bei Lagerung und innerbetrieblicher Transport der Einzelteile reduziert. Die lösbare Verbindung erleichtert die Montage und Demontage und ermöglicht den Austausch von Einzelteilen oder Baugruppen der Kupplungsausrückvorrichtung bei Wartung und Reparatur.

### Kurze Beschreibung der Zeichnungen

Die Erfindung wird nachfolgend anhand von Ausführungsbeispielen näher erläutert. Es zeigen:
- Figur 1: eine Detailansicht einer in der Darstellung längs der Längsmittelachse geschnittenen Kupplungsausrückvorrichtung
- Figur 2: einen Sicherungsring mit Steckelementen als Einzelteil,
- Figur 3: ein weiteres Ausführungsbeispiel eines Sicherungsringes mit Steckelementen
- Figur 4: ein Ausführungsbeispiel eines Steckelements
- Figur 5: ein weiteres Ausführungsbeispiel einer Steckverbindung, in der die Bauelemente der Wirkverbindung einteilig mit den Steckelementen ausgebildet sind und
- Figur 6: einen Ausschnitt der Wirkverbindung nach Figur 5 in einer mit dem Richtungspfeil nach Figur 5 gerichteten räumlich dargestellten Draufsicht auf eine Anbindung an einen Nehmerzylinderkolben.

### Detaillierte Beschreibung der Zeichnung

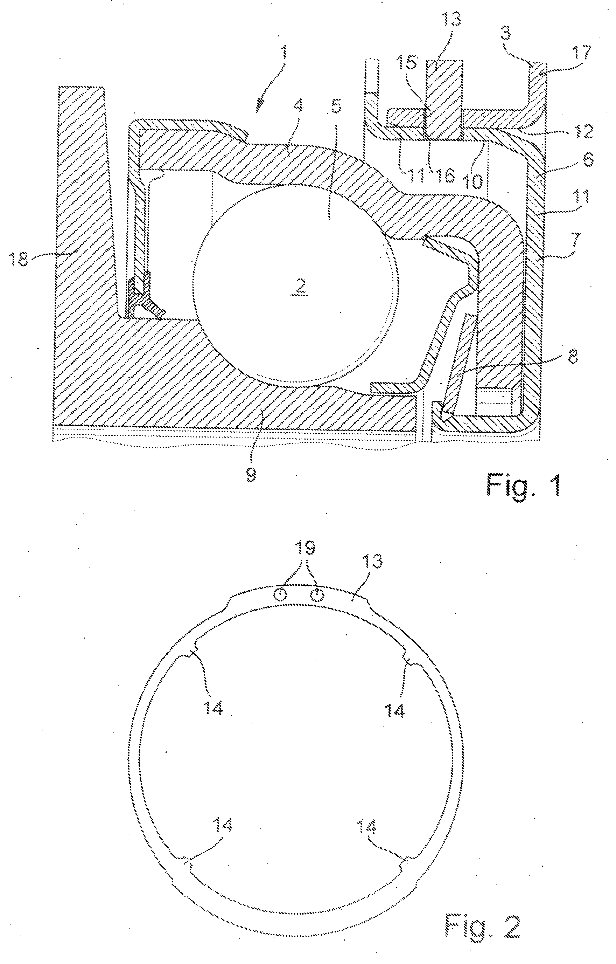

Figur 1 zeigt eine druckmittelbetätigte Kupplungsausrückvorrichtung 1, die aus einem selbstzentrierenden Kupplungsausrücklager 2, aus einem ersten Bauelement 6 und aus einem zweiten Bauelement 3 in Form eines Nehmerzylinderkolbens 17 oder einer Hülse auf einem Nehmerzylinderkolben einer nicht weiter dargestellten pneumatischen oder hydraulischen Betätigungseinrichtung gebildet ist. Das zweite Bauelement kann auch eine andere Anbindung an einen Nehmerzylinderkolben sein, über die das Ausrücksystem das Kupplungsausrücklagers verschiebt. Das Kupplungsausrücklager 2 weist einen Innenring 9, einen Außenring 4 und Wälzkörper 5 auf.

Der Innenring 9 ist miteiner Druckplatte 18 versehen, von der aus Ausrückkräfte, die von dem zweiten Bauelement 3 ausgehenden, in die nicht dargestellte Kupplung eingebracht werden. Die Ausrückkräfte werden von dem zweiten Bauelement 3 auf das erste Bauelement 6 aufgebracht. Das erste Bauelement 6 ist ein Führungsflansch 7.

Der Führungsflansch 7 ist dem Außenring 4 zugeordnet und steht mit diesem in einer Wirkverbindung. Die Ausrückkräfte werden von dem Nehmerzylinderkolben 17 über den Führungsflansch 7 an den Außenring 4 weitergegeben. Außerdem zentriert sich das Kupplungsausrücklager 2 an dem Führungsflansch 7 selbst und ist dazu über den Außenring 4 mittels einer Feder 8 relativ zu dem Führungsflansch 7 radialbeweglich gegen den Führungsflansch 7 vorgespannt.

Der Führungsflansch 7 weist einen topfförmigen Abschnitt 10 auf, an dessen Boden 11 sich der Außenring 4 radial beweglich abstützt und dessen hohlzylindrischer Abschnitt 35 in einer hohlzylindrischen Aufnahme 12 des Nehmerzylinderkolbens 17 oder einer hohlzylindrischen Aufnahme 12 einer auf dem Nehmerzylinderkolben sitzenden Hülse mit radial engem Spiel geführt ist.

Der hohlzylindrische Abschnitt 35 und die Aufnahme 12 weisen jeweils in diesem Fall schlitzförmige Stecklöcher 15 bzw. 16 auf. Bei der Montage der Kupplungsausrückvorrichtung 1 wird der Führungsflansch 7 in die Aufnahme 12 eingeführt bis jeweils ein Paar aus übereinander liegenden Stecklöchern 15 und 16 radial zu einem Durchgangsloch ausgerichtet ist. Das Durchgangsloch durchbricht die Wandungen der konzentrisch ineinander gesteckten Bauelemente 3 und 6. Anschließend wird der Sicherungsring 13 aufgespreizt und über die hohlzylindrische Aufnahme 12 geschoben. Dabei werden die Steckelemente 14 über den Stecklöchern 15 und 16 positioniert. Der losgelassene Sicherungsring 13 spannt radial nach innen vor, so dass die Steckelemente 14 in die Stecklöcher 15, 16 eingreifen. Das Kupplungsausrücklager 2 ist somit axial und radial fest mit dem Nehmerzylinderkolben 17 verbunden.

Figur 2 zeigt ein Ausführungsbeispiel des Sicherungsringes 13 als Blechstanzteil, für den bevorzugt Federstahl oder gehärteter anderer beliebiger Stahl eingesetzt ist. Der Sicherungsring 13 ist in Anlehnung an die normierten Sicherungsringe für Wellen gestaltet, geschlitzt sowie mit den entsprechenden Eingriffslöchern 19 zum Aufspreizen mit einem Montagewerkzeug versehen. Abweichend von den nach Norm gestalteten Sicherungsringen weist der Sicherungsring 13 in diesem Fall radial nach innen gerichtete Steckelemente 14 auf.

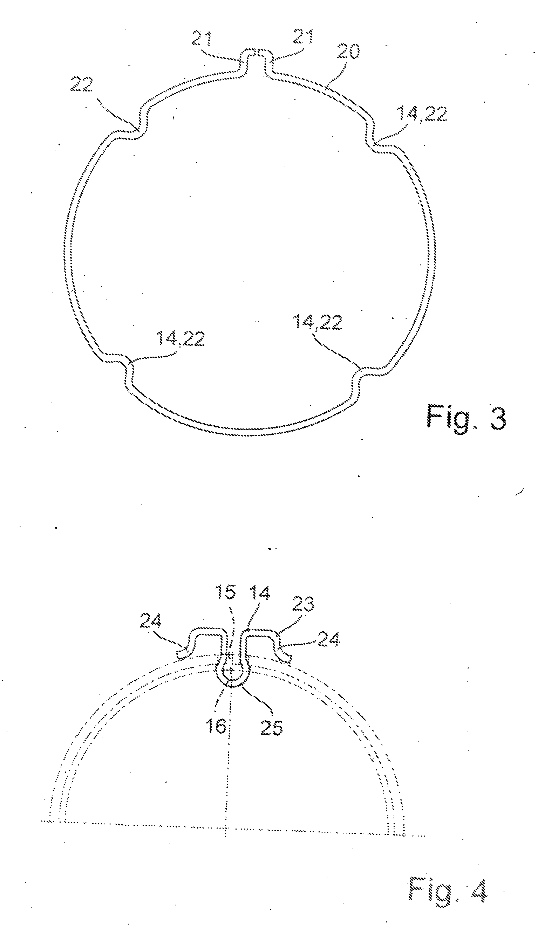

Figur 3 zeigt einen Sicherungsring 20 aus gebogenem Stahldraht. Der Sicherungsring 20 weist hakenförmige Montagehilfen 21 auf, die von einem Werkzeug zum Aufspreizen hintergriffen werden können. Mit dem Draht des Sicherungsringes 20 sind schlaufenförmig ausgebildete Vorsprünge 22 zu den Steckelementen 14 geformt. Die Steckelemente 14 sind z.B. für den Eingriff in die Durchgangslöcher z.B. aus den Stecklöchern 15 und 16 gebildet.

Figur 4 zeigt den Einsatz von mehreren Steckelementen 14 in Form von Bügeln 23. Das Steckelement 14 ist aus Draht gebildet und weist Montagehaken 24 für die Demontage des Steckelements 14 zum Lösen einer Steckverbindung. Das Steckelement 14 weist eine durch die Stecklöcher 15, 16 hindurch gesteckte und aus einem der Stecklöcher 16 heraus ragende Drahtschlaufe 25 auf. Die aus dem Steckloch 16 herausragende Drahtschlaufe 25 ist so in zwei zueinander entgegengesetzte Richtungen ausgebogen, dass die Drahtschlaufe 25 seitlich über die Begrenzungsränder des Steckloches 16 hinaus steht. Die Drahtschlaufe 25 ist mit Vorspannung in das Durchgangsloch eingeführt. Dadurch ist das Steckelement 14 tangential vorgespannt und spannt auch radial vor, in dem sich das Steckelement mit den federelastischen Montagehaken 24 radial außen beidseitig des Steckloches 15 federelastisch gegen die Zugkräfte der Drahtschlaufe 25 abstützt.

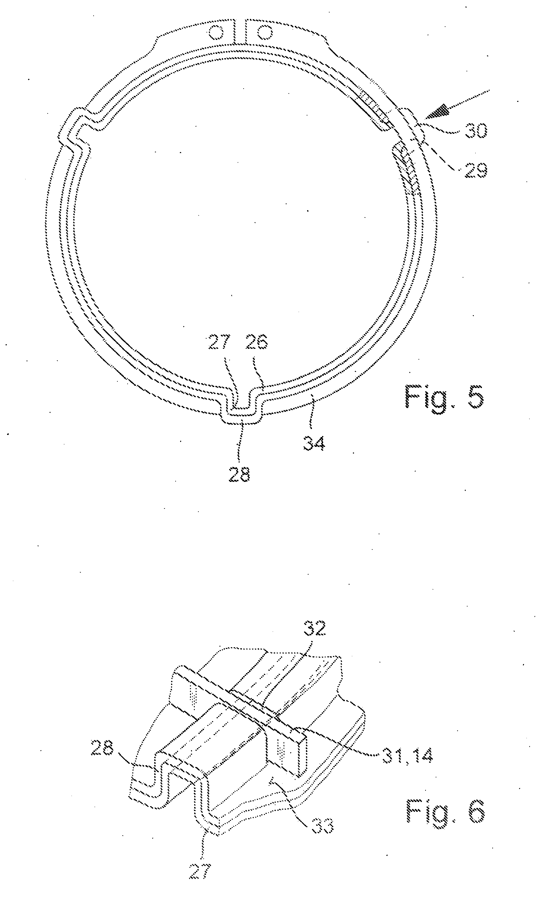

Die Figuren 5 und 6 zeigen eine Verbindung zwischen einem als Hülse 26 ausgebildeten ersten Bauelement 6 und einem als Nehmerzylinderkolben 34 ausgebildeten zweiten Bauelement 3. Die Hülse ist einem nicht dargestellten Ausrücklager zugeordnet. Figur 6 zeigt einen Ausschnitt der Wirkverbindung nach Figur 5 in einer mit dem Richtungspfeil nach Figur 5 gerichteten räumlich dargestellten Draufsicht auf den Nehmerzylinderkolben 34 oder dessen Anbindung. Es ist eine von drei Steckverbindungen nach Figur 5 im Detail, vergrößert und nicht maßstäblich dargestellt. Die Hülse 26 und der Nehmerzylinderkolben 34 weisen radial hervorstehende längs ausgerichtete Steckprofile 27 bzw. 28 auf, die radial und längsgerichtet formschlüssig ineinander greifen. Die Steckprofile 27 und 28 weisen miteinander korrespondierende schlitzartige Stecklöcher 29, 30 auf. Die aneinander ausgerichteten Stecklöcher bilden einen Durchgangsschlitz 32, in die als Steckelement 14 jeweils ein Abschnitt eines handelsüblichen Sicherungsringes 31 eingreift. Der Sicherungsring 31 ist in die Durchgangschlitze 32 eingeschnappt und liegt mit oder ohne Vorspannung auf der Oberfläche 33 des Nehmerzylinders oder auf der Hülse des Nehmerzylinderkolbens außen auf.

### Bezugszeichen

- 1: Kupplungsausrückvorrichtung
- 2: Kupplungsausrücklager
- 3: zweites Bauelement
- 4: Außenring
- 5: Wälzkörper
- 6: erstes Bauelement
- 7: Führungsflansch
- 8: Feder
- 9: Innenring
- 10: topfförmiger Abschnitt
- 11: Boden
- 13: Sicherungsring
- 14: Steckelement
- 15: Steckloch
- 16: Steckloch
- 17: Nehmerzylinderkolben
- 18: Druckplatte
- 19: Eingriffsloch
- 20: Sicherungsring
- 21: Montagehilfe
- 22: Vorsprung
- 23: Bügel
- 24: Montagehaken
- 25: Drahtschlaufe
- 26: Hülse
- 27: Steckprofil
- 28: Steckprofil
- 29: Steckloch
- 30: Steckloch
- 31: Sicherungsring
- 32: Durchgangsschlitz
- 33: Oberfläche
- 34: Nehmerzylinderkolben
- 35: hohlzylindrischer Abschnitt

## Patentansprüche

1. Kupplungsausrückvorrichtung (1) mit zumindest einem Kupplungsausrücklager (2) und mit einer Betätigungseinrichtung, wobei zumindest ein dem Kupplungsausrücklager (2) zugeordnetes erstes Bauelement (6) und wenigstens ein der Betätigungseinrichtung zugeordnetes zweites Bauelement (3) zu einer Wirkverbindung zwischen dem Kupplungsausrücklager (2) und der Betätigungseinrichtung mittels zumindest eines Steckelementes (14) miteinander verbunden sind, wobei die Bauelemente (3, 6) konzentrisch zueinander *angeordnet aufeinander sitzen, und* wobei das zu dem ersten Bauelement (6) feste Steckelement (14) in mindesten in ein Steckloch (29, 30) an dem zweiten Bauelement (3) zumindest formschlüssig eingreift, wozu wenigstens eines der Bauelemente (3, 6) ein radiales erstes Steckprofil (27) *aus einer radialen Erhöhung* und zumindest das andere der Bauelemente mindestens ein mit dem ersten Steckprofil (27) zu einer Steckverbindung korrespondierendes radiales Steckprofil (28) *mit einer radialen Vertiefung* aufweist, **dadurch gekennzeichnet, dass** die Steckprofile (27, 28) formschlüssig ineinander greifen, *in dem* die radiale Erhöhung in die radiale Vertiefung eingreift, so dass die Bauelemente (3, 6) gegen Verdrehen um die Rotationsachse relativ zueinander gesichert sind, *und dass die Steckprofile (27, 28) jeweils ein schlitzartig ausgebildetes Steckloch (29, 30) aufweisen, wobei die Stecklöcher miteinander einen Durchgangsschlitz bilden, in den das Steckelement (14) eingreift.*

2. Kupplungsausrückvorrichtung nach Anspruch 1, **dadurch gekennzeichnet, dass** die Bauelemente (3, 6) mittels des Steckelementes (14) lösbar miteinander verbunden sind.

3. Kupplungsausrückvorrichtung nach Anspruch 1, **dadurch gekennzeichnet, dass** das Steckelement (14) gegen die Begrenzung zumindest eines der Stecklöcher (15, 16) vorgespannt ist.

4. Kupplungsausrückvorrichtung nach Anspruch 1, **dadurch gekennzeichnet, dass** das erste Bauelement (6) mit einem Lagerring des Kupplungsausrücklagers (2) verbunden ist und dass das zweite Bauelement (3) ein Nehmerzylinderkolben (17, 34) einer druckmittelbetätigten Kupplungsausrückvorrichtung (1) ist.

5. Kupplungsausrückvorrichtung nach Anspruch 4, **dadurch gekennzeichnet, dass** der Lagerring ein Außenring (4) des Kupplungsausrücklagers (2) ist.

6. Kupplungsausrückvorrichtung nach Anspruch 1 oder 5, **dadurch gekennzeichnet, dass** das erste Bauelement (6) ein Führungsflansch (7) ist, wobei an dem Führungsflansch (7) ein Lagerring des sich selbst zentrierenden Kupplungsausrücklagers (2) in radiale Richtungen zumindest begrenzt beweglich vorgespannt anliegt und dabei der Führungsflansch (7) mit der Betätigungseinrichtung wenigstens mittels des Steckelements (14) verbunden ist.

## Claims

1. Clutch release device (1) with at least one clutch release bearing (2) and with an actuating mechanism, wherein at least one first structural element (6), which is assigned to the clutch release bearing (2), and at least one second structural element (3), which is assigned to the actuating mechanism, are connected to each other by means of at least one plug-in element (14) in order to form an operative connection between the clutch release bearing (2) and the actuating mechanism, wherein the structural elements (3, 6) sit on each other in a manner arranged concentrically with respect to each other, and wherein the plug-in element (14) which is fixed with respect to the first structural element (6) engages at least in a form-fitting manner in at least one plug-in hole (29, 30) on the second structural element (3), for which purpose at least one of the structural elements (3, 6) has a radial first plug-in profile (27) consisting of a radial elevation, and at least the other of the structural elements has at least one radial plug-in profile (28) with a radial depression, the radial plug-in profile corresponding to the first plug-in profile (27) in order to form a plug-in connection, **characterized in that** the plug-in profiles (27, 28) engage in a form-fitting manner one inside the other by the radial elevation engaging in the radial depression, and therefore the structural elements (3, 6) are secured against rotation about the axis of rotation relative to each other, and **in that** the plug-in profiles (27, 28) each have a plug-in hole (29, 30) designed in the manner of a slot, the plug-in holes together forming a passage slot in which the plug-in element (14) engages.

2. Clutch release device according to Claim 1, **characterized in that** the structural elements (3, 6) are connected releasably to each other by means of the plug-in element (14).

3. Clutch release device according to Claim 1, **characterized in that** the plug-in element (14) is prestressed against the boundary of at least one of the plug-in holes (15, 16).

4. Clutch release device according to Claim 1, **characterized in that** the first structural element (6) is connected to a bearing ring of the clutch release bearing (2), and **in that** the second structural element (3) is a slave cylinder piston (17, 34) of a clutch release device (1) actuated by pressure medium.

5. Clutch release device according to Claim 4, **characterized in that** the bearing ring is an outer ring (4) of the clutch release bearing (2).

6. Clutch release device according to Claim 1 or 5, **characterized in that** the first structural element (6) is a guide flange (7), wherein a bearing ring of the self-centring clutch release bearing (2) bears under prestress against the guide flange (7) so as to be movable at least to a limited extent in radial directions and, in the process, the guide flange (7) is connected to the actuating mechanism at least by means of the plug-in element (14).

## Revendications

1. Dispositif de débrayage d'embrayage (1), comprenant au moins un palier de débrayage d'embrayage (2) et comprenant un dispositif d'actionnement, au moins un premier élément structural (6) associé au palier de débrayage d'embrayage (2) et au moins un deuxième élément structural (3) associé au dispositif d'actionnement étant reliés les uns aux autres au moyen d'au moins un élément enfichable (14) de manière à former une liaison fonctionnelle entre le palier de débrayage d'embrayage (2) et le dispositif d'actionnement, les éléments structuraux (3, 6) étant placés les uns sur les autres de manière à être disposés de façon concentrique les uns aux autres, et l'élément enfichable (14) fixe par rapport au premier élément structural (6) venant en prise dans au moins un trou d'enfichage (29, 30) sur le deuxième élément structural (3), au moins l'un des éléments structuraux (3, 6) comprenant un premier profil d'enfichage radial (27) constitué d'un rehaussement radial et au moins l'autre des éléments structuraux comprenant au moins un profil d'enfichage (28) radial qui est doté d'un évidement radial et qui correspond au premier profil d'enfichage (27) de manière à former une liaison par enfichage, **caractérisé en ce que** les profils d'enfichage (27, 28) s'engagent les uns dans les autres par coopération de formes, par le fait que les rehaussements radiaux viennent en prise dans les évidements radiaux, de manière à empêcher que les éléments structuraux (3, 6) tournent les uns par rapport aux autres autour de l'axe de rotation, et **en ce que** les profils d'enfichage (27, 28) comprennent à chaque fois un trou d'enfichage (29, 30) réalisé sous forme de fente, les trous d'enfichage formant les uns avec les autres une fente traversante dans laquelle vient en prise l'élément enfichable (14).

2. Dispositif de débrayage d'embrayage selon la revendication 1, **caractérisé en ce que** les éléments structuraux (3, 6) sont reliés les uns aux autres de manière amovible au moyen de l'élément enfichable (14).

3. Dispositif de débrayage d'embrayage selon la revendication 1, **caractérisé en ce que** l'élément enfichable (14) est précontraint contre la délimitation d'au moins l'un des trous d'enfichage (15, 16).

4. Dispositif de débrayage d'embrayage selon la revendication 1, **caractérisé en ce que** le premier élément structural (6) est relié à une bague de palier du palier de débrayage d'embrayage (2), et **en ce que** le deuxième élément structural (3) est un piston de cylindre récepteur (17, 34) d'un dispositif de débrayage d'embrayage (1) actionné par un fluide sous pression.

5. Dispositif de débrayage d'embrayage selon la revendication 4, **caractérisé en ce que** la bague de palier est une bague extérieure (4) du palier de débrayage d'embrayage (2).

6. Dispositif de débrayage d'embrayage selon la revendication 1 ou 5, **caractérisé en ce que** le premier élément structural (6) est une bride de guidage (7), une bague de palier du palier de débrayage d'embrayage (2) s'auto-centrant s'appliquant contre la bride de guidage (7) de manière précontrainte et mobile au moins de manière limitée dans la direction radiale, et à cet effet, la bride de guidage (7) étant reliée au dispositif d'actionnement au moins au moyen de l'élément enfichable (14).
